(19) Europäisches Patentamt
European Patent Office
Office européen des brevets

(11) **EP 4 084 259 A1**

(12) **EUROPÄISCHE PATENTANMELDUNG**

(43) Veröffentlichungstag:
**02.11.2022   Patentblatt 2022/44**

(21) Anmeldenummer: **21170492.9**

(22) Anmeldetag: **26.04.2021**

(51) Internationale Patentklassifikation (IPC):
**H02J 3/38** (2006.01)    **F03D 7/02** (2006.01)
**F03D 9/25** (2016.01)

(52) Gemeinsame Patentklassifikation (CPC):
**H02J 3/381; F03D 7/0284;** F05B 2270/337

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Wobben Properties GmbH**
**26607 Aurich (DE)**

(72) Erfinder: **Brombach, Johannes**
**13437 Berlin (DE)**

(74) Vertreter: **Eisenführ Speiser**
**Patentanwälte Rechtsanwälte PartGmbB**
**Postfach 10 60 78**
**28060 Bremen (DE)**

(54) **VERFAHREN UND WINDENERGIESYSTEM ZUM EINSPEISEN ELEKTRISCHER LEISTUNG IN EIN ELEKTRISCHES VERSORGUNGSNETZ**

(57)    Die Erfindung betrifft ein Verfahren zum Einspeisen elektrischer Leistung in ein elektrisches Versorgungsnetz über einen Verbindungsknoten mittels einer umrichtergeführten Einspeiseeinheit, insbesondere mittels einer Windenergieanlage (100) oder eines Windparks (112), wobei das elektrische Versorgungsnetz (120) eine Netzspannung und eine Netzfrequenz aufweist und durch eine Netznennspannung und eine Netznennfrequenz gekennzeichnet ist, die elektrische Netzspannung des elektrischen Versorgungsnetzes (120) erfasst wird, in Abhängigkeit von der erfassten Netzspannung ein verzögerter Differenzwinkel ermittelt wird, wobei der verzögerte Differenzwinkel einer Differenz entspricht zwischen einem erfassten Phasensignal, das einen zeitlichen Verlauf eines Phasenwinkels der Netzspannung angibt, und einem gegenüber dem erfassten Phasensignal verzögertem Phasensignal, eine für den Verbindungsknoten (118) wirksame Netzimpedanz ($Z_{net}$) erfasst wird, und eine Einspeiseleistung ($P_E$) in Abhängigkeit von dem verzögerten Differenzwinkel und in Abhängigkeit von der erfassten Netzimpedanz vorgegeben wird.

Fig. 3

EP 4 084 259 A1

## Beschreibung

Die vorliegende Erfindung betrifft ein Verfahren zum Einspeisen elektrischer Leistung in ein elektrisches Versorgungsnetz mittels einer umrichtergeführten Einspeiseeinheit. Die Erfindung betrifft auch ein Windenergiesystem zum Einspeisen elektrischer Leistung in das elektrische Versorgungsnetz.

Ein herkömmliches elektrisches Versorgungsnetz wird oder wurde zumindest überwiegend durch direkt gekoppelte Synchrongeneratoren von Großkraftwerken gespeist. Solche direkt gekoppelten Synchrongeneratoren arbeiten physikalisch bedingt spannungsprägend. Auf Änderungen der Netzspannung reagieren sie sofort und wirken dabei der Spannungsänderung entgegen. Das ergibt sich aus der Natur eines Synchrongenerators.

Viele elektrische Versorgungsnetze erfahren nun eine Zunahme an regenerativen Energiequellen als Einspeiser in das elektrische Versorgungsnetz. Unter anderem sind Windenergieanlagen oder Windparks mit mehreren Windenergieanlagen als regenerative Einspeiser zu nennen. Solche regenerativen Einspeiser verwenden wenigstens einen Umrichter zum Einspeisen der elektrischen Leistung in das elektrische Versorgungsnetz. Die Verwendung eines Umrichters umfasst hier auch die Verwendung eines Wechselrichters. Hier kommt es auf die Wirkung auf das elektrische Versorgungsnetz an und insoweit sind die Unterschiede zwischen Umrichter und Wechselrichter hier nicht von Bedeutung. Jegliche Ausführungsformen zu einem Wechselrichter betreffen somit auch einen Umrichter und umgekehrt, sodass hier der Begriff "Wechselrichter" auch synonym durch den Begriff "Umrichter" austauschbar wäre, und umgekehrt.

Mit solchen Wechselrichtern oder Umrichtern speisen die regenerativen Energiequellen üblicherweise stromprägend in das elektrische Versorgungsnetz ein. Bei einer hohen Umrichterpenetration, bei der also viel Leistung mittels Umrichter bzw. Wechselrichter eingespeist wird, fällt die Spannungsstützung durch direkt gekoppelte Synchrongeneratoren schwächer aus und daher könnte in Betracht kommen, spannungsprägende Umrichter als Lösung für Netze mit einer sehr hohen Umrichterpenetration einzusetzen.

Heutige stromprägende Umrichter weisen aber eine überlegene Dynamik auf, um schnell das Referenzsystem, das die Einspeisung führt, an Netzänderungen anzupassen. Stromprägend arbeitende Umrichter können sich also schnell an Netzänderungen anpassen, was gegen spannungsprägend arbeitende Umrichter sprechen könnte. Spannungsprägend arbeitende Umrichter benötigen zudem viel Leistung als Regelreserve, um die bei der Spannungsprägung nötige Reaktion auf Spannungsänderungen auch umsetzen zu können.

Das elektrische Versorgungsnetz benötig somit, wegen dem Rückgang direkt gekoppelter Synchrongeneratoren, dämpfende Eigenschaften, welche schnellen Änderungen entgegenwirken. Diese dämpfenden Eigenschaften können als Momentanreserve bezeichnet werden und kommen herkömmlicherweise aus Synchrongeneratoren. Auch spannungsprägende Umrichter können diese Eigenschaften bereitstellen.

Um ein Verhalten träger Maschinen nachzubilden, und damit eine solche dämpfende Eigenschaft zu erzielen, könnte zusätzlich ein träges Referenzsystem in die Regelung umrichtergeführter Einspeiseeinheiten integriert werden, was auf die Stromreferenz wirkt. Die Stromreferenz ist insoweit der Sollwert des einzuspeisenden Stromes nach Betrag und Phase. Ein träges Referenzsystem kann dazu führen, dass der eingespeiste Strom einer Veränderung der Phasenlage der Netzspannung nur verzögert nachgeführt wird. Eine Frequenzänderung der Netzspannung führt somit zu einer Veränderung eines Phasenwinkels zwischen eingespeistem Strom und der Netzspannung, die bewusst nicht sofort ausgeregelt wird. Das kann zu einer Veränderung der eingespeisten Leistung führen, die der Frequenzänderung der Netzspannung entgegenwirkt. Das kann dämpfend wirken.

Ein ähnliches Prinzip verfolgt das Patent US 10,794,364, bei dem aber eine Ausgangsspannung beim Einspeisen vorgegeben wird und somit insbesondere ein spannungsprägendes System zugrunde gelegt wird. Dadurch kann eine besonders schnelle, intrinsische Reaktion auf Spannungsänderungen im elektrischen Versorgungsnetz erzielt werden. Somit wird eine spezielle Lösung angeboten, die zudem durch die Verwendung eines spannungsprägenden umrichtergeführten Einspeisers erkauft wird.

Obwohl ein spannungsprägendes Verhalten durchaus auch für umrichtergeführte Einspeiser wünschenswert sein kann, kann es aber auch Probleme mit sich bringen. Besonders ist das bereits genannte Problem zu erwähnen, dass ein spannungsprägender Betrieb eines umrichtergeführten Einspeisers bei der Umsetzung zu hohen Leistungsschwankungen führen kann. Das wiederum kann zu dem Problem führen, dass ein solcher spannungsprägender Betrieb an seine Grenzen stoßen kann, wenn die benötigte Leistung für die Leistungsvariation nicht oder nicht schnell genug bereitsteht. Es kann auch dazu führen, dass besonders bei Windenergieanlagen eine solche schnelle Leistungsschwankung auf das mechanische System durchschlägt, insbesondere zu starken Drehmomentschwankungen des Rotors der Windenergieanlage führen kann.

Der vorliegenden Erfindung liegt somit die Aufgabe zugrunde, zumindest eines der oben genannten Probleme zu adressieren. Insbesondere soll eine Lösung vorgeschlagen werden, bei der mittels umrichtergeführter Einspeiser ein positiver Effekt auf das elektrische Versorgungsnetz erreicht werden kann, insbesondere eine dämpfende Wirkung durch umrichtergeführte Einspeiser auf das elektrische Versorgungsnetz erreicht werden kann, ohne dass diese umrichtergeführten Einspeiser spannungsprägend arbeiten, zumindest nicht ausschließlich spannungsprägend arbeiten. Zumindest soll zu bisher bekannten Lösungen eine alternative Lösung gefunden werden.

Erfindungsgemäß wird ein Verfahren zum Einspeisen elektrischer Leistung nach Anspruch 1 vorgeschlagen. Demnach wird elektrische Leistung in ein elektrisches Versorgungsnetz über einen Verbindungsknoten mittels einer umrichtergeführten Einspeiseeinheit eingespeist. Der Verbindungsknoten ist insbesondere ein Netzanschlusspunkt, an dem die Einspeiseeinheit an das elektrische Versorgungsnetz einspeist. Es kommt aber auch in Betracht, dass der Verbindungsknoten kein unmittelbarer Netzanschlusspunkt ist, sondern z.B. ein Knoten in einem Windparknetz mit mehreren Windenergieanlagen, wenn die Windenergieanlagen des Windparks jeweils die Einspeiseeinheit bilden. Jegliche Erläuterungen und Ausführungsformen, die sich auf den Netzanschlusspunkt beziehen, einschließlich Erläuterungen einer Netzimpedanz, sollen sich auch auf einen solchen allgemeinen Verbindungsknoten beziehen. Jegliche Erläuterungen zum Netzanschlusspunkt sind somit auch Erläuterungen zum Verbindungsknoten, die lediglich der besseren Übersichtlichkeit nicht wiederholt werden.

Eine genannte umrichtergeführte Einspeiseeinheit ist insbesondere eine Windenergieanlage oder ein Windpark, der mehrere Windenergieanlagen aufweist, die gemeinsam an dem Netzanschlusspunkt einspeisen. Eine umrichtergeführte Einspeiseeinheit ist eine Einspeiseeinheit, die unter Verwendung eines oder mehrerer Umrichter, oder eines oder mehrerer Wechselrichter, in das elektrische Versorgungsnetz einspeist. Ein Unterschied zwischen Umrichter einerseits und Wechselrichter andererseits ist für die vorliegende Erfindung nicht von Relevanz.

Das elektrische Versorgungsnetz weist eine Netzspannung und eine Netzfrequenz auf. Das elektrische Versorgungsnetz ist außerdem durch eine Netznennspannung und eine Netznennfrequenz gekennzeichnet. Damit werden die beiden Größen bezeichnet, die das elektrische Versorgungsnetz im Normalbetrieb aufweisen sollte. Die Netznennfrequenz beträgt üblicherweise 50 Hz oder 60 Hz.

Es wird weiter vorgeschlagen, dass die elektrische Netzspannung des elektrischen Versorgungsnetzes erfasst wird und in Abhängigkeit von der erfassten Netzspannung ein verzögerter Differenzwinkel ermittelt wird. Der verzögerte Differenzwinkel entspricht einer Differenz zwischen einerseits einem erfassten Phasensignal, das einen zeitlichen Verlauf eines Phasenwinkels der Netzspannung angibt, und andererseits einem gegenüber dem erfassten Phasenwinkel verzögerten Phasensignal. Das verzögerte Phasensignal kann insoweit eine reine Rechengröße sein, die durch ein Verzögerungsglied aus dem erfassten Phasensignal bestimmt, insbesondere berechnet wird.

Außerdem wird eine für den Verbindungsknoten, insbesondere für den Netzanschlusspunkt wirksame Netzimpedanz erfasst. Eine solche wirksame Netzimpedanz ist insbesondere eine Impedanz zwischen dem Netzanschlusspunkt oder anderem Verbindungsknoten und einem Referenzpunkt, der auch ein virtueller Referenzpunkt sein kann. Eine solche Netzimpedanz kann als Quotient zwischen der Netznennspannung und einem Kurzschlussstrom am Netzanschlusspunkt berechnet werden. Der Kurzschlussstrom am Netzanschlusspunkt ist derjenige Strom, der sich einstellt, wenn am Netzanschlusspunkt bei nicht angeschlossener Einspeiseeinheit ein Kurzschluss auftritt. Mit anderen Worten ist der Kurzschlussstrom derjenige Strom, der bei einem Kurzschluss am Netzanschlusspunkt durch das elektrische Versorgungsnetz geliefert wird.

Eine solche Netzimpedanz wurde als wichtige Größe erkannt, um das Einspeisen zu steuern. Diese Netzimpedanz, die insoweit auch als Netzimpedanz des Netzanschlusspunktes bezeichnet werden kann, gibt insbesondere an, wie weich das elektrische Versorgungsnetz in Bezug auf den Netzanschlusspunkt ist. Bei einer großen Netzimpedanz wird in Bezug auf den Netzanschlusspunkt von einem sehr weichen Netz ausgegangen. Als Bewertungskriterium kann ein Kurzschlussstromverhältnis verwendet werden, das ein Quotient ist zwischen einem Kurzschlussstrom am Netzanschlusspunkt und einem Nennstrom der Einspeiseeinheit an demselben Netzanschlusspunkt. Der Kurzschlussstrom ist derjenige Strom, den das elektrische Versorgungsnetz bei einem Kurzschluss am Netzanschlusspunkt dort bereitstellt, also der Strom, der im Falle des erläuterten Kurzschlussstroms bereitgestellt wird.

Besonders bevorzugt wird das vorgeschlagene Verfahren eingesetzt, wenn das Kurzschlussstromverhältnis groß ist, insbesondere größer als 8 oder weiter bevorzugt größer als 10. Hier wurde besonders erkannt, dass ein stromprägendes Verfahren sinnvoll ist. Eine stromprägende Einspeisung hat den Vorteil, dass sie bei großen Kurzschlussstromverhältnissen, anders als eine spannungsprägende Einspeisung, wenig auf Spannungsschwankungen reagiert. Spannungsschwankungen im elektrischen Versorgungsnetz werden bei großem Kurzschlussstromverhältnis, also bei kleiner Netzimpedanz, besonders stark an den Netzanschlusspunkt weitergeleitet. Daher wird hier die stromprägende Einspeisung vorgeschlagen, die wenig auf Spannungsschwankungen reagiert, aber dennoch eine Netzstabilisierung ähnlich einer spannungsprägenden Einspeisung erreichen kann.

Es wird weiter vorgeschlagen, dass eine Einspeiseleistung in Abhängigkeit von dem verzögerten Differenzwinkel und in Abhängigkeit von der erfassten Netzimpedanz vorgegeben wird.

Durch die Erzeugung des verzögerten Phasensignals ergibt sich ein verzögerter Differenzwinkel, der von Änderungen des erfassten Phasensignals abhängt. Das erfasste Phasensignal und damit auch das verzögerte Phasensignal bezeichnen im Grunde eine Phasenlage, also keinen mit der Netzfrequenz umlaufenden Phasenwinkel, sondern eine Phase, die im Wesentlichen einen konstanten Wert aufweist. Ändert sich das erfasste Phasensignal, indem es beispielsweise von 10° auf 20° ansteigt, folgt das verzögerte Phasensignal entsprechend verzögert. Das verzögerte Phasensignal kann dann ebenfalls von 10° auf 20° ansteigen, erreicht diese 20° aber erst später. Das führt dazu, dass der verzögerte Differenzwinkel besonders in diesem Übergangsbereich relevant ist. Ist der Übergangsbereich, in dem sich also das erfasste Phasensignal verändert hat, lange genug beendet, kann das verzögerte Phasensignal den Wert des erfassten Phasensignals erreicht haben, sodass der verzögerte Differenzwinkel wieder den Wert null angenommen hat.

Somit beeinflusst besonders dieser verzögerte Phasenwinkel das Vorgeben der Einspeiseleistung in diesen Übergangsbereich. Außerdem wird die Einspeiseleistung in Abhängigkeit von der erfassten Netzimpedanz vorgegeben. Dieses Vorgeben der Einspeiseleistung berücksichtigt somit insbesondere, wie weich das elektrische Versorgungsnetz an dem Netzanschlusspunkt ist.

Besonders wurde erkannt, dass über den verzögerten Differenzwinkel ein Leistungsbedarf erfasst, zumindest abgeschätzt werden kann, der der zugrundeliegenden Veränderung des erfassten Phasensignals zugeordnet werden kann. Zusätzlich wurde erkannt, dass über die Netzimpedanz erfasst oder zumindest abgeschätzt werden kann, wie viel Leistungseinspeisung bzw. Änderung der Leistungseinspeisung zulässig ist, ohne eine Stabilität zu gefährden. Auch wurde erkannt, dass die Einspeisung oder Veränderung der Einspeisung der elektrischen Leistung selbst zu einem Phasenwinkel bzw. einer Veränderung eines Phasenwinkels durch die Netzimpedanz führen kann. Auch das kann somit bei dem Vorgeben der Einspeiseleistung in Abhängigkeit von der erfassten Netzimpedanz berücksichtigt werden.

Die Einspeiseleistung kann auch über einen Einspeisestrom vorgegeben werden, sodass dieser in Abhängigkeit von dem verzögerten Differenzwinkel und in Abhängigkeit von der erfassten Netzimpedanz vorgegeben werden würde. Es geht hier aber nicht um die Vorgabe eines Stromzeigers nach Betrag und Phase, sondern um die Amplitude, also insbesondere den Effektivwert des Einspeisestroms. Bei konstanter Spannung ist dieser proportional zur Einspeiseleistung.

Gemäß einem Aspekt wird vorgeschlagen, dass das erfasste Phasensignal eine Phasenlage im Sinne eines nicht umlaufenden Phasenwinkels angibt, dass das erfasste Phasensignal über ein Verzögerungsglied geführt wird, um das verzögerte Phasensignal zu erzeugen, und dass der verzögerte Differenzwinkel als Differenz zwischen dem erfassten Phasensignal und dem verzögerten Phasensignal gebildet wird.

Das Verzögerungsglied kann besonders als Verzögerungsglied erster Ordnung ausgebildet sein. Dadurch kann ausgeschlossen werden, dass dieses Verzögerungsglied schwingt. Wird das erfasste Phasensignal, das eine Phasenlage im Sinne eines nicht umlaufenden Phasensignals angibt, über ein solches Verzögerungsglied geführt, stellt sich im stationären Zustand am Ausgang des Verzögerungsglieds derselbe Wert wie am Eingang ein. Nur bei Veränderungen des erfassten Phasensignals führt das Verzögerungsglied an seinem Ausgang zu einem abweichenden Signal und damit zu einem von null verschiedenen verzögerten Differenzwinkel.

Diese Phasenlage im Sinne eines nicht umlaufenden Phasenwinkels kann beispielsweise durch Vergleich mit einem Referenzsignal gleicher oder ähnlicher Frequenz erzeugt werden. Insbesondere kann ein Referenzsignal mit Netznennfrequenz erzeugt werden. Dieses Referenzsignal, das auch als Referenzspannungssignal ausgebildet sein kann, kann insoweit durch einen mit Netzfrequenz umlaufenden Spannungszeiger wiedergegeben werden. Die erfasste Netzspannung kann ebenfalls durch einen umlaufenden Spannungszeiger wiedergegeben werden, der nämlich mit Netzfrequenz umläuft. Im stationären bzw. quasistationären Zustand, wenn also sowohl die Referenzspannung als auch die erfasste Spannung mit Netznennfrequenz umlaufen, wenn also die Netzfrequenz der Netznennfrequenz entspricht, ergibt sich zwischen erfasstem Spannungssignal und Referenzspannungssignal ein fester Winkel und dieser bezeichnet die Phasenlage. Der zeitliche Verlauf dieses festen Winkels bezeichnet das erfasste Phasensignal. In dem genannten Zustand, bei dem die Netzfrequenz der Netznennfrequenz entspricht, ist das erfasste Phasensignal somit ein konstanter Wert.

Ändert sich nun die Netzspannung hinsichtlich ihrer Frequenz, verändert sich der Winkel zwischen erfasstem Spannungssignal und Referenzspannungssignal. Mit anderen Worten laufen die beiden Spannungszeiger dann nicht mehr absolut synchron zueinander, wodurch sich die Änderung des Winkels zwischen diesen beiden Zeigern ergibt. Die Phasenlage ändert sich dann also.

Wenn, um bei diesem Beispiel für das Referenzsignal zu bleiben, die Netzfrequenz dauerhaft nicht der Netznennfrequenz entspricht, z. B. dauerhaft etwas größer ist, bewegt sich der Spannungszeiger der erfassten Netzspannung dauerhaft schneller als der Zeiger der Referenzspannung. Das kann dazu führen, dass der Differenzwinkel zwischen diesen beiden Zeigern, und damit die Phasenlage, kontinuierlich steigt und eventuell auch größer als 360° wird. Allerdings wäre ein solcher Vorgang sehr langsam und würde damit für die Phasenlage auch keinen umlaufenden Phasenwinkel beschreiben, sondern nur einen sich langsam ändernden Winkel, also eine sich langsam ändernde Phasenlage.

Bei einer langsamen Änderung der Phasenlage kann das verzögerte Phasensignal trotzdem zumindest näherungsweise den Wert des erfassten Phasensignals erreichen, auch wenn dieser stetig ansteigt (oder in einem anderen Fall abfällt).

Es kommt aber auch in Betracht, die Phasenlage anders zu bestimmen als durch ein Spannungsreferenzsignal, das fest durch die Netznennfrequenz gekennzeichnet ist. Beispielsweise kann ein solches Referenzspannungssignal an die Netzfrequenz angepasst werden, wenn diese dauerhaft von der Netznennfrequenz abweicht. Dann würde sich im stationären bzw. quasistationären Zustand wieder ein konstanter Wert für die Phasenlage ergeben.

Gemäß einem Aspekt wird vorgeschlagen, dass die Verzögerung zwischen erfasstem Phasensignal und verzögertem Phasensignal durch eine Verzögerungszeitkonstante gekennzeichnet ist, die im Bereich von 1 - 10 Sekunden liegt. Insbesondere wird vorgeschlagen, dass die Verzögerung durch ein Verzögerungsglied erreicht wird, das als Verzögerungsglied erster Ordnung ausgebildet ist, mit der Verzögerungszeit als Zeitkonstante des Verzögerungsglieds.

Die Verwendung eines Verzögerungsgliedes erster Ordnung ist bevorzugt und ein solches ist im Grunde eindeutig in seiner Dynamik durch eine Zeitkonstante gekennzeichnet. Die Zeitkonstante eines Verzögerungsglieds erster Ordnung gibt an, nach welcher Zeit eine Sprungantwort den Wert 63 % des Eingangssprungs erreicht hat. Diese Zeitkonstante des Verzögerungsglieds ist damit die Verzögerungszeitkonstante.

Die Verzögerung kann aber auch anderweitig erreicht werden, z. B. durch ein Verzögerungsglied höherer Ordnung, das dem Verzögerungsglied 1. Ordnung aber ähnlich sein kann. Auch dort kann beispielsweise als Verzögerungszeitkonstante der Zeitwert angenommen werden, nach dem die Sprungantwort 63 % erreicht hat. Es kommt aber auch in Betracht, dass ein Verzögerungsglied oder eine Verzögerungsdynamik höherer Ordnung verwendet wird, wobei eine Hauptzeitkonstante, insbesondere die größte Zeitkonstante, der Verzögerungszeitkonstanten entspricht.

Jedenfalls ist wichtig, dass die Verzögerungszeitkonstante größer als eine systematisch bedingte Zeitkonstante ist, wie beispielsweise eine Zeitkonstante, die sich bei einem zeitdiskreten System durch eine Abtastzeitkonstante ergibt, oder als eine Zeitkonstante, die sich physikalisch bedingt ergibt, z. B. durch die Dynamik einer Spannungsmesseinrichtung.

Gleichzeitig sollte die Verzögerungszeitkonstante aber auch nicht zu groß sein. Mit den Werten von 1 - 10 Sekunden wird bei einer Netznennfrequenz von 50 Hz somit eine Zeitkonstante gewählt, die dem 50-Fachen bis 500-Fachen der Periodendauer des Spannungssignals entspricht. Auch bei Verwendung eines elektrischen Versorgungsnetzes mit einer Netznennfrequenz von 60 Hz liegt noch eine ähnliche Größenordnung vor.

Die Wahl der Verzögerungszeitkonstanten im Bereich von 1 - 10 Sekunden macht auch deutlich, dass sie deutlich größer als eine Zeitkonstante eines Netzfilters ist.

Wie bereits erläutert, wird gemäß einem Aspekt vorgeschlagen, dass das Phasensignal einen Phasenwinkel einer Spannungsphase in Bezug auf eine Referenzphase angibt. Hier kann somit ein Phasenwinkel zwischen der erfassten Netzspannung und einer mit ähnlicher Frequenz, insbesondere Netznennfrequenz schwingenden Referenzphase verwendet werden. Das resultierende Phasensignal gibt somit im stationären oder quasistationären Zustand einen über die Zeit festen Wert wieder.

Gemäß einem Aspekt wird vorgeschlagen, dass zum Vorgeben der Einspeiseleistung in Abhängigkeit von der erfassten Netzimpedanz der verzögerte Differenzwinkel in Bezug gesetzt wird zu einer Phasenverschiebung zwischen Strom und Spannung bedingt durch die erfasste Netzimpedanz. Es wird also der verzögerte Differenzwinkel mit einer Phasenverschiebung über die Netzimpedanz in Bezug gesetzt. Es wurde erkannt, dass dadurch im Grunde der Leistungsbedarf mit einem Potential der Leistungsübertragbarkeit über die Netzimpedanz ins Verhältnis gesetzt wird. Der verzögerte Differenzwinkel ist dabei ein Indikator für benötigte Leistung. Die Phasenverschiebung über die Netzimpedanz, die somit auch ein Differenzwinkel ist, ist ein Indikator für die übertragbare Leistung über diese Netzimpedanz. Je größer diese Phasenverschiebung ist, umso weniger Leistung kann nämlich übertragen werden. Das kann somit durch die Erfassung der Phasenverschiebung berücksichtigt werden.

Dabei wurde auch erkannt, dass der verzögerte Differenzwinkel auf einfache Art und Weise und auch kontinuierlich bestimmt werden kann. Der verzögerte Differenzwinkel wird im Normalfall den Wert null haben und nur bei Veränderungen, wenn also ein Leistungsbedarf besteht, relevant werden. Dieser kann in einfacher Weise mit der Phasenverschiebung in Bezug gesetzt werden, weil beide Größen gleicher Art sind, also beides Phasenverschiebungen sind.

Insbesondere wird vorgeschlagen, dass der verzögerte Differenzwinkel in Bezug gesetzt wird zu einer Phasenverschiebung bei Übertragung einer Nennleistung der Einspeiseeinheit über die Netzimpedanz. Bei fester Netzimpedanz und üblicherweise fest vorgegebener Nennleistung der Einspeiseeinheit kann die Phasenverschiebung zwischen Strom und Spannung bedingt durch die Netzimpedanz eine Konstante sein. Zu der wird der Bezug des verzögerten Differenzwinkels hergestellt. Damit ist es besonders möglich, eine Einspeiseleistung oder eine Änderung in der Einspeiseleistung als Nachbildung einer Momentanreserve zu bestimmen. Eine solche Momentanreserve ist die kurzfristige Einspeisung zusätzlicher Leistung, wenn ein entsprechend erhöhter Leistungsbedarf im elektrischen Versorgungsnetz auftritt, der durch einen Frequenzabfall angezeigt wird. Diese Momentanreserve bzw. entsprechende Leistung orientiert sich am Leistungsbedarf und auch an den Möglichkeiten, diese bereitzustellen. Trotzdem ist aber auch eine Berücksichtigung einer geänderten Netzimpedanz möglich. Das Erfassen einer Netzimpedanz kann aber auch bedeuten, diese in einem Vorab-Schritt zu erfassen, wenn mit Änderungen nicht zu rechnen ist.

Insbesondere wird, unabhängig davon, ob die Phasenverschiebung auf Nennleistung oder einen anderen Wert bezogen ist, vorgeschlagen, dass ein Quotient gebildet wird aus dem verzögerten Differenzwinkel und der Phasenverschiebung. Dadurch kann der verzögerte Differenzwinkel auf einfache Art und Weise in Bezug gesetzt werden zu der Phasenverschiebung.

Gemäß einem Aspekt wird vorgeschlagen, dass zum Vorgeben der Einspeiseleistung in Abhängigkeit von der erfassten Netzimpedanz, ein Quotient gebildet wird aus dem verzögerten Differenzwinkel und der Phasenverschiebung zwischen Strom und Spannung, bedingt durch die erfasste Netzimpedanz, wobei die Phasenverschiebung φ berechnet wird durch die Formel:

$$\varphi = \arcsin\left(\frac{\sqrt{(P_N * Z)}}{U_N}\right)$$

In dieser Formel bezeichnen $P_N$ eine Nennleistung des Einspeisers, $Z$ die Netzimpedanz und $U_N$ die Netznennspannung. Dadurch kann die Phasenverschiebung genau und reproduzierbar berechnet werden, sofern sich die Netzimpedanz nicht ändert, und damit eine gute Basis bilden. Vorteile der Berücksichtigung der Phasenverschiebung sind vorstehend bereits erläutert worden und sind genauso anwendbar, wenn die Phasenverschiebung durch obige Formel berechnet wird.

Gemäß einem Aspekt wird vorgeschlagen, dass die Netzimpedanz im laufenden Betrieb der Windenergieanlage laufend, insbesondere kontinuierlich erfasst wird, um dadurch die erfasste Netzimpedanz zu erhalten. Das kann durch Messungen erfolgen.

Es kommt aber auch in Betracht, die Spannung an einem Referenzknoten im elektrischen Versorgungsnetz und am Netzanschlusspunkt nach Betrag und Phase zu erfassen. Daraus kann ein Spannungsabfall nach Betrag und Phase zwischen dem Netzanschlusspunkt und dem Referenzpunkt berechnet werden. Ein Quotient zwischen diesem komplexen Wert des Spannungsabfalls und dem komplexen Wert des Einspeisestroms ergibt die Impedanz zwischen dem Netzanschlusspunkt und dem Referenzpunkt. Die kann, je nach Wahl des Referenzpunktes, als erfasst Netzimpedanz verwendet werden, oder davon kann auf eine erfasste Netzimpedanz hochgerechnet werden.

Besonders wird vorgeschlagen, den eingespeisten Strom zu variieren, und die Reaktion der Spannung am Netzanschlusspunkt auszuwerten und daraus die Netzimpedanz zu erfassen. Eine Variation des eingespeisten Stroms kann sich auch durch eine natürliche Schwankung der eingespeisten Leistung ergeben, z.B. durch Windschwankungen.

Gemäß einem Aspekt wird vorgeschlagen, dass das Verfahren an einem Verbindungsknoten, insbesondere an einem Netzanschlusspunkt mit einem Kurzschlussstromverhältnis von wenigstens 8, insbesondere wenigstens 10 durchgeführt wird. Die Vorteile dazu wurden oben schon beschrieben.

Gemäß einem Aspekt wird vorgeschlagen, dass der Quotient aus dem verzögerten Differenzwinkel und der Phasenverschiebung zwischen Strom und Spannung, bedingt durch die erfasste Netzimpedanz, als Bewertungsquotient gebildet wird, als Maß einer Bewertung des verzögerten Differenzwinkels zu der Phasenverschiebung, und der Bewertungsquotient zum Vorgeben der Einspeiseleistung mit einem vorbestimmten Leistungswert multipliziert wird, insbesondere mit der Nennleistung der Einspeiseeinheit. Über den Quotienten zwischen dem verzögerten Differenzwinkel und der Phasenverschiebung ergibt sich ein abstraktes oder relatives Maß für die Einspeiseleistung. Dieses Maß berücksichtigt den Leistungsbedarf und das Potential zur Übertragung solcher Einspeiseleistung. Zur konkreten Umsetzung kann dieses abstrakte oder relative Maß mit einem vorbestimmten Leistungswert multipliziert werden. Die Nennleistung hat sich hier als besonders sinnvoll herausgestellt.

Entspricht beispielsweise der verzögerte Differenzwinkel, um ein einfach zu erläuterndes Beispiel zu nehmen, der Phasenverschiebung, so ist der Quotient 1. Der Leistungsbedarf entspricht hier, ebenfalls vereinfacht ausgedrückt, der sinnvoll übertragbaren Leistung. Wird dieser Quotient dann mit Nennleistung multipliziert, kann als Ergebnis herauskommen, dass die Einspeiseleistung der Nennleistung entsprechen soll. Ist der verzögerte Differenzwinkel aber geringer, oder wird er durch die Verzögerungsfunktion wieder geringer, so fällt die vorgegebene Einspeiseleistung entsprechend ebenfalls wieder ab. Die so vorgeschlagene Berechnung hat somit zu einer kurzen zusätzlichen Leistungseinspeisung geführt, die auf einfache Art und Weise berechnet wurde und zu einem sinnvollen Wert geführt hat.

Es kommt aber auch in Betracht, statt Nennleistung eine andere Leistung zu verwenden und/oder eine Gewichtungsfunktion oder einen Gewichtungsfaktor vorzusehen, der insbesondere bei Verwendung der Nennleistung kleiner als 1 ist.

Neben einer Begrenzung der einspeisbaren Leistung kann auch die verfügbare Energie die Einspeisung zusätzlicher Leistung begrenzen. Solche Begrenzungen der verfügbaren Energie können dabei auch über die genannte Gewichtungsfunktion oder den Gewichtungsfaktor berücksichtigt werden. Zusätzlich oder alternativ kommt in Betracht, die Zeitkonstante der Verzögerung so einzustellen, dass verfügbare Energie zu berücksichtigen wird. Wird die Zeitkonstante verkürzt, wird auch die Dauer, in der zusätzliche Einspeiseleistung eingespeist wird, verkürzt, ohne dass aber die Amplitude sich erhöht. Somit kann durch die Verkürzung der Zeitkonstanten der Verzögerung der Energiebedarf verringert werden.

Gemäß einem Aspekt wird vorgeschlagen, dass zum Vorgeben der Einspeiseleistung in Abhängigkeit von dem verzögerten Differenzwinkel und der erfassten Netzimpedanz eine Ergänzungsleistung in Abhängigkeit von dem verzögerten Differenzwinkel und der erfassten Netzimpedanz bestimmt wird, und zu einer von dem verzögerten Differenzwinkel unabhängig vorgegebenen Sollleistung addiert wird, um die Einspeiseleistung als insgesamt einzuspeisende Leistung vorzugeben. Die Einspeiseleistung setzt sich also aus der Sollleistung und der Ergänzungsleistung zusammen.

Die Sollleistung ist besonders die Sollleistung, die die Einspeiseeinheit im Normalbetrieb einspeisen soll, insbesondere im stationären oder quasistationären Betrieb, in dem die Netzfrequenz im Wesentlichen konstant ist. Dazu ergänzend wird die Ergänzungsleistung bestimmt.

Besonders wird die Ergänzungsleistung, wie in den vorstehenden Ausführungsformen erläutert wurde, bestimmt. Sie wird dann zu der Sollleistung addiert, und das Gesamtergebnis ist die Einspeiseleistung, die damit natürlich auch von dem verzögerten Differenzwinkel und der erfassten Netzimpedanz abhängt und auch dadurch von diesen beiden Größen abhängig vorgegeben wird.

Es kann daher sinnvoll sein, das erläuterte Verfahren so zu parametrieren, dass die Ergänzungsleistung geringer als die Nennleistung der Einspeiseeinheit bestimmt wird. Eine solche Parametrierung kann besonders bei der Multiplikation des Bewertungsquotienten mit dem vorbestimmten Leistungswert erfolgen. Der vorbestimmte Leistungswert kann dafür entsprechend ausgewählt werden, insbesondere kann er deutlich kleiner als die Nennleistung ausgewählt werden bzw. es kann eine Gewichtungsfunktion oder Gewichtung entsprechend kleiner als 1 gewählt werden. Das ist besonders dann, sinnvoll, wenn eine Multiplikation des Bewertungsquotienten mit der Nennleistung der Einspeiseeinheit durchgeführt wird.

Gemäß einem Aspekt wird vorgeschlagen, dass der Bewertungsquotient zum Vorgeben des Einspeisestroms mit dem vorbestimmten Leistungswert multipliziert wird, insbesondere mit der Nennleistung der Einspeiseeinheit multipliziert wird, um dadurch die Ergänzungsleistung zu erhalten. Dadurch gibt es eine klare Bestimmungsanweisung, mit der auf einfache Art und Weise aus dem Spannungssignal mit der Verzögerungsfunktion ein verzögertes Phasensignal und daraus ein verzögerter Differenzwinkel bestimmt werden kann.

Mithilfe des Differenzwinkels wird der Bewertungsquotient berechnet und dieser braucht nur noch mit dem vorbestimmten Leistungswert bzw. der Nennleistung, gegebenenfalls multipliziert mit einem Gewichtungsfaktor, multipliziert zu werden. Das Ergebnis ist die Ergänzungsleistung, die zusätzlich zur normal einzuspeisenden Leistung eingespeist wird. Dadurch kann ein abgeschlossener Prozess geschaffen werden, der solche Ergänzungsleistung mithilfe der vorgeschlagenen Phasenbetrachtung auch als kontinuierliche Vorgabe vorgeben kann.

Gemäß einem Aspekt wird vorgeschlagen, dass die Ergänzungsleistung, die zu der von dem verzögerten Differenzwinkel unabhängig vorgegebenen Sollleistung addiert wird, um die Einspeiseleistung als insgesamt einzuspeisende Leistung vorzugeben, mit einem Anpassungsterm, insbesondere einem Anpassungsfaktor modifiziert, insbesondere multipliziert wird, der zwischen 0 und 1 liegt. Insbesondere wird vorgeschlagen, dass der Anpassungsterm in Abhängigkeit von einer bzw. der Sollleistung und/oder einer aktuell eingespeisten Leistung eingestellt wird.

Hier wurde erkannt, dass nicht jede ideal bestimmte Ergänzungsleistung auch tatsächlich ergänzt werden kann. Es kann vorkommen, dass nur eine kleinere Ergänzungsleistung ergänzt werden kann, also zusätzlich zur Sollleistung eingespeist werden kann. Das kann über den Anpassungsterm berücksichtigt werden. Damit wird vermieden, dass die gesamte Einspeiseleistung zu oft, oder überhaupt, durch eine faktische Leistungsbeschränkung abgeschnitten wird.

Solche Reduzierungen können in Vorversuchen dimensioniert werden. Dabei wurde erkannt, dass eine Abhängigkeit von der aktuell eingespeisten Leistung bestehen kann. Da die aktuell eingespeiste Leistung aber selbst von der Ergänzungsleistung abhängt, wird vorgeschlagen, sie über die Sollleistung zu berücksichtigen, also über die von dem verzögerten Differenzwinkel unabhängig vorgegebenen Sollleistung. Es kommt aber auch in Betracht, die aktuell eingespeiste Leistung über eine weitere Verzögerung zu berücksichtigen, um dadurch eine unmittelbare Rückwirkung zu vermeiden.

Die einfachste und gleichzeitig bevorzugte Variante ist, einen Anpassungsfaktor zu nehmen. Es kann aber auch eine Anpassungsfunktion verwendet werden, die z.B. gleichzeitig die aktuell eingespeiste Leistung bzw. die Sollleistung berücksichtigt.

Die Multiplikation, oder andere Modifikation, kann auf vielfältige Weise umgesetzt werden. Eine Möglichkeit ist, die berücksichtige Nennleistung zu modifizieren. Beträgt der Anpassungsfaktor bspw. 0,5 und soll er mit der Ergänzungsleistung multipliziert werden, kann dafür die Nennleistung halbiert werden, bevor sie mit dem Bewertungsquotienten multipliziert wird.

Erfindungsgemäß wird auch ein Windenergiesystem vorgeschlagen. Das Windenergiesystem weist eine oder mehrere Windenergieanlagen zum Einspeisen elektrischer Leistung in ein elektrisches Versorgungsnetz über einen Verbindungsknoten, insbesondere an einem Netzanschlusspunkt auf. Das Windenergiesystem kann somit auch als Windenergieanlage oder als Windpark mit mehreren Windenergieanlagen verstanden werden. Es wird vorgeschlagen, dass das Windenergiesystem oder jede Windenergieanlage jeweils als eine umrichtergeführte Einspeiseeinheit ausgebildet sind, das elektrische Versorgungsnetz eine Netzspannung und eine Netzfrequenz aufweist und durch eine Netznennspannung und eine Netznennfrequenz gekennzeichnet ist. Außerdem ist das Windenergiesystem dazu vorbereitet, dass die elektrische Netzspannung des elektrischen Versorgungsnetzes erfasst wird, und in Abhängigkeit von der erfassten Netzspannung ein verzögerter Differenzwinkel ermittelt wird. Der verzögerte Differenzwinkel entspricht einer Differenz zwischen einem erfassten Phasensignal, das einen zeitlichen Verlauf eines Phasenwinkels der Netzspannung angibt, und einem gegenüber dem erfassten Phasensignal verzögertem Phasensignal. Außerdem wird eine für den Netzanschlusspunkt wirksame Netzimpedanz erfasst, und eine Einspeiseleistung in Abhängigkeit von dem verzögerten Differenzwinkel und in Abhängigkeit von der erfassten Netzimpedanz vorgegeben.

Das Windenergiesystem, also die einzelne Windenergieanlage oder auch der Windpark mit den mehreren Windenergieanlagen, ist jeweils als umrichtergeführte Einspeiseeinheit ausgebildet. Im Falle einer einzelnen Windenergieanlage weist diese eine oder mehrere Umrichter bzw. Wechselrichter auf, die in das elektrische Versorgungsnetz einspeisen. Ist das Windenergiesystem als Windpark mit mehreren Windenergieanlagen ausgebildet, so kann jede Windenergieanlage einzeln umrichtergeführt arbeiten, sodass dadurch der Windpark insgesamt auch umrichtergeführt arbeitet. Es kommt auch in Betracht, dass ein Windpark zentral eine Umrichteranordnung oder Wechselrichteranordnung aufweist, um die einzuspeisende Leistung von den Windenergieanlagen zu sammeln und dann mittels dieser zentralen Umrichteranordnung oder Wechselrichteranordnung die so von den Windenergieanlagen gesammelte Leistung in das elektrische Versorgungsnetz einzuspeisen.

Das elektrische Versorgungsnetz ist wie schon vorstehend zum Verfahren zum Einspeisen erläutert ausgebildet. Das Windenergiesystem ist dazu vorbereitet, dass elektrische Netzspannung des elektrischen Versorgungsnetzes erfasst wird und kann dafür eine oder mehrere entsprechende Messeinrichtungen aufweisen. Häufig sind solche Messeinrichtungen an jeder Windenergieanlage vorgesehen, besonders dann, wenn diese wenigstens einen Umrichter oder Wechselrichter zum Einspeisen aufweist.

Das Windenergiesystem ist ferner dazu vorbereitet, in Abhängigkeit von der erfassten Netzspannung einen verzögerten Differenzwinkel zu ermitteln. Dafür kann eine entsprechende Messeinrichtung vorhanden sein bzw. die Messeinrichtung zum Erfassen der elektrischen Netzspannung verwendet werden. Gleichzeitig ist eine Auswerteeinheit vorgesehen, die auch Teil der Steuerung der Windenergieanlage oder des Windenergiesystems sein kann. Die Auswerteeinheit ist dazu vorbereitet, die entsprechenden Berechnungen vorzusehen. Sie kann auch ein Referenzsystem betreiben. Dazu kann eine entsprechende Berechnung oder Steuerung als Auswerteprogramm implementiert sein.

Ebenfalls ist das Windenergiesystem dazu vorbereitet, dass eine für den Netzanschlusspunkt wirksame Netzimpedanz erfasst wird. Dies kann auch durch eine Vorabmessung und/oder Eingabe der Netzimpedanz realisiert werden. Zumindest ist das Windenergiesystem dazu vorbereitet, eine solche Netzimpedanz zu berücksichtigen. Ein entsprechendes Programm kann implementiert sein oder in der implementierten Steuerung kann das enthalten sein.

Weiterhin kann in einer entsprechenden Steuerung implementiert oder enthalten sein, dass eine Einspeiseleistung bestimmt und dadurch vorgegeben wird, indem der verzögerte Differenzwinkel berücksichtigt wird und die erfasste Netzimpedanz berücksichtigt wird. Ein entsprechendes Vorgehen kann in einer Steuerung oder Auswerteeinheit implementiert sein.

Gemäß einem Aspekt wird vorgeschlagen, dass das Windenergiesystem dazu vorbereitet ist, ein Verfahren nach einer der vorstehend beschriebenen Ausführungsformen durchzuführen. Insbesondere wird vorgeschlagen, dass dazu eine zentrale Steuereinrichtung vorgesehen ist, und/oder jede Windenergieanlage eine Anlagensteuerung aufweist, in der das Verfahren implementiert ist. Das Verfahren ist also in der zentralen Steuereinrichtung implementiert, oder in jeder Anlagensteuerung der einzelnen Windenergieanlage. Sofern das Windenergiesystem nur eine Windenergieanlage aufweist, ist das gleichbedeutend. Wenn das Windenergiesystem mehrere Windenergieanlagen aufweist und das Verfahren auf jeder Anlagensteuerung implementiert ist, gibt somit jede Anlagensteuerung für ihre einzelne Windenergieanlage eine Einspeiseleistung in Abhängigkeit von dem verzögerten Differenzwinkel und in Abhängigkeit von der erfassten Netzimpedanz vor.

Alternativ kann dies in der zentralen Steuereinrichtung des Windenergiesystems durchgeführt werden. Es kommt auch eine Kombination in Betracht. Dazu kann beispielsweise eine Erfassung der Netzspannung mittels einer oder mehrerer Windenergieanlagen erfolgen und das Ergebnis der zentralen Steuereinrichtung zur weiteren Verarbeitung und Vorgabe der Einspeiseleistung bereitgestellt werden.

Nachfolgend wird die Erfindung exemplarisch anhand von Ausführungsformen unter Bezugnahme auf die begleitenden Figuren näher erläutert.

Figur 1    zeigt eine Windenergieanlage in einer perspektivischen Darstellung.

Figur 2    zeigt einen Windpark in einer schematischen Darstellung.

Figur 3    zeigt ein Schema zum Durchführen des vorgeschlagenen Verfahrens.

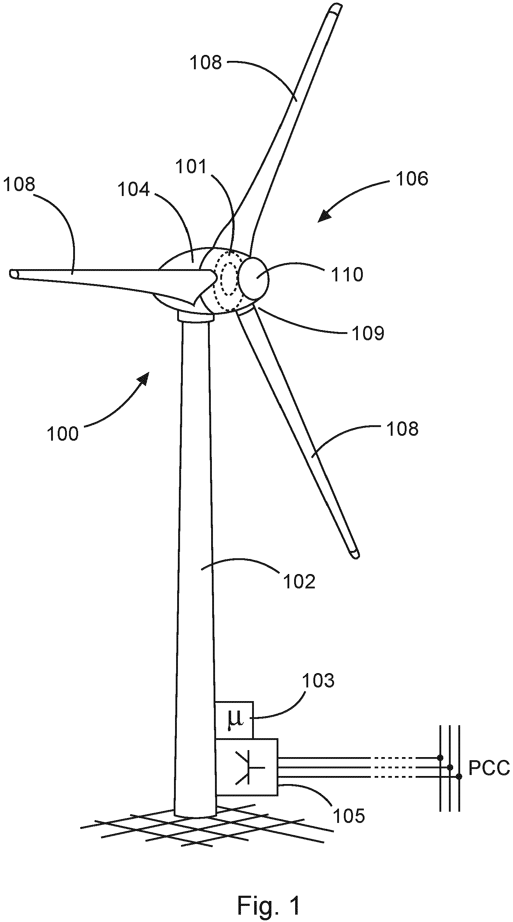

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

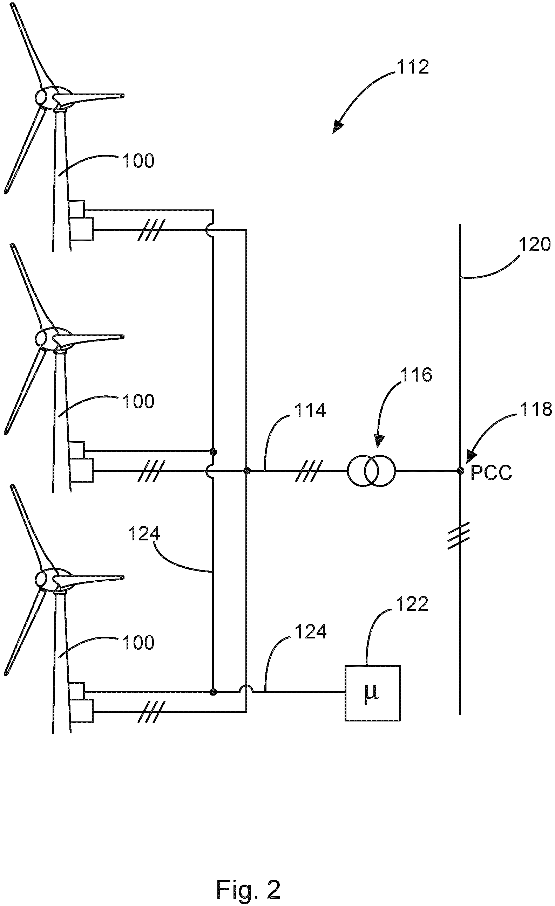

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112.

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

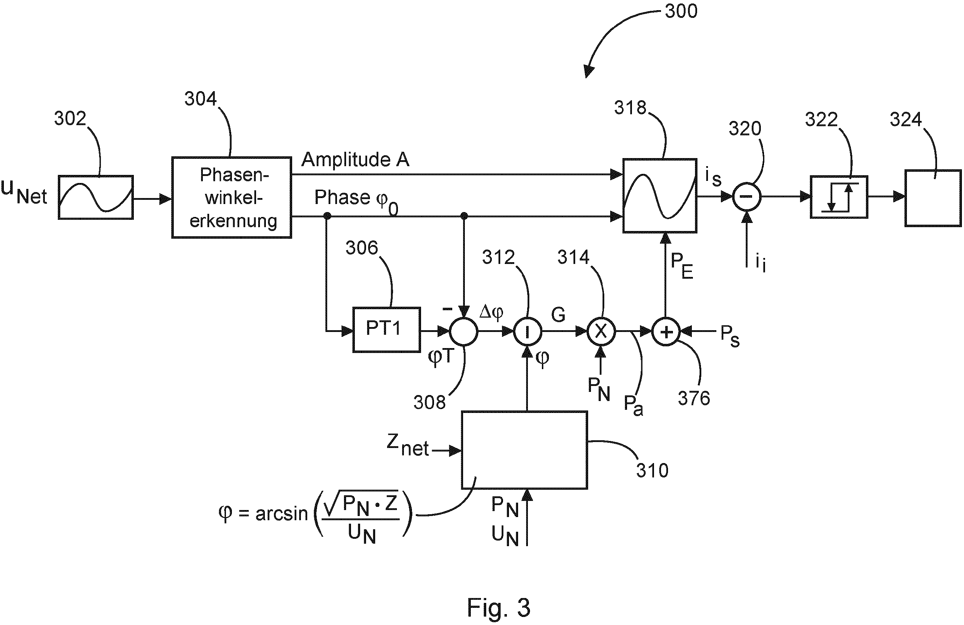

Fig. 3 zeigt ein Ablaufschema 300 mit symbolischen Funktionsblöcken und Verknüpfungen. Das Ablaufschema 300 startet mit einem Spannungserfassungsblock 302, der auch repräsentativ für die Netzspannung insgesamt stehen kann. Jedenfalls wird die Netzspannung erfasst und an den Erkennungsblock 304 übergeben. In dem Erkennungsblock 304 wird von der Netzspannung die Amplitude A und ein Phasenwinkel als Phase $\varphi_0$ erfasst. Beides kann kontinuierlich und somit als Zeitsignal ausgegeben werden. Die Phase $\varphi_0$ gibt somit als Verlauf über die Zeit ein Phasensignal wieder, dass einen zeitlichen Verlauf des Phasenwinkels der Netzspannung angibt.

Das Phasensignal $\varphi_0$ wird über ein Verzögerungsglied 306 geführt. Am Ausgang des Verzögerungsglieds 306 ergibt sich somit ein verzögertes Phasensignal $\varphi_T$. Von diesem verzögerten Phasensignal $\varphi_T$ wird in dem Phasensummierglied 308 das Phasensignal $\varphi_0$, also das unverzögerte Phasensignal, abgezogen und es ergibt sich der verzögerte Differenzwinkel $\Delta\varphi$. Der verzögerte Differenzwinkel $\Delta\varphi$ kann auch synonym als verzögertes Differenzwinkelsignal bezeichnet werden. Das gilt nicht nur für diese Ausführungsform, sondern generell.

Weiterhin wird vorgeschlagen, die Netzimpedanz zu berücksichtigen. Dafür ist der Netzimpedanzblock 310 vorgesehen. Der Netzimpedanzblock 310 berücksichtigt die Netzimpedanz und berechnet unter Berücksichtigung der Netzimpedanz $Z_{net}$ die Phasenverschiebung $\varphi$. Dazu wird neben der Netzimpedanz $Z_{net}$ auch die Nennleistung $P_N$ der betreffenden Einspeiseeinheit sowie die Nennspannung $U_N$ berücksichtigt. Das kann besonders durch die Formel erfolgen, die zu dem Netzimpedanzblock 310 eingegeben ist. Nur aus Platzgründen ist die Formel außerhalb des Netzimpedanzblocks 310 aufgeführt. Die Formel berechnet im Zähler das Produkt aus Nennleistung und der Netzimpedanz und aus diesem Produkt wird die Wurzel gezogen. Das Ergebnis ist die Spannung, die an der Netzimpedanz abfällt, wenn Nennleistung über die Netzimpedanz übertragen wird. Diese Spannung wird mit der Netznennspannung $U_N$ in Bezug gesetzt, nämlich durch sie geteilt. Das Ergebnis sollte zwischen 0 und 1 liegen. Es geht gegen 0, wenn keine Spannung an der Netzimpedanz abfällt, die Netzimpedanz also gegen 0 geht, gegen 1 geht der Wert, wenn die gesamte Netzspannung an Impedanz abfällt, was allerdings keinen realistischen Betriebspunkt darstellt. Davon wird der Arkussinus gebildet, dass sich die Phasenverschiebung $\varphi$ ergibt, die somit zwischen 0 und 90° liegt, jedenfalls theoretisch.

Es ist zu beachten, dass in der Formel die Netzimpedanz der Einfachheit halber nur mit Z bezeichnet wird. Sie betrifft aber dieselbe Netzimpedanz, die in den Netzimpedanzblock 310 als Netzimpedanz $Z_{net}$ eingegeben wird.

Das Ergebnis des Netzimpedanzblocks 310 ist somit die Phasenverschiebung $\varphi$, die nämlich auf Nennleistung der Einspeiseeinheit bezogen ist. Dadurch wird die Netzimpedanz und auch die Nennleistung der Einspeiseeinheit in dieser Phasenverschiebung $\varphi$ berücksichtigt.

Dazu wird vorgeschlagen, den verzögerten Differenzwinkel $\Delta\varphi$ durch diese Phasenverschiebung $\varphi$ zu teilen. Dazu ist das Divisionsglied 312 vorgesehen. Das Ergebnis ist ein Quotient aus dem verzögerten Differenzwinkel $\Delta\varphi$ und der Phasenverschiebung $\varphi$. Dieser Quotient kann als Gewichtung G angesehen werden. Es ist zu erwarten, dass der Quotient und damit die Gewichtung G deutlich kleiner als 1 ist. Es kommt aber auch in Betracht, dass die Gewichtung G mit einem vorbestimmbaren Anpassungsfaktor, der zwischen 0 und 1 liegt, angepasst wird, wenn Voruntersuchungen ergeben haben, dass die Gewichtung G zu groß werden kann und herunterskaliert werden sollte.

Die Gewichtungsfunktion G, gegebenenfalls eine über einen Anpassungsfaktor modifizierte Gewichtungsfunktion, wird dann in dem Produktglied 314 mit der Nennleistung $P_N$ der Einspeiseeinheit multipliziert. Das Ergebnis ist eine Ergänzungsleistung $P_a$. Gleichwirkend kann auch die Ergänzungsleistung $P_a$ mit einem Anpassungsfaktor multipliziert werden. Diese Ergänzungsleistung $P_a$, mit oder ohne Modifizierung durch einen Anpassungsfaktor, wird an der Leistungssummierstelle 316 der Sollleistung Ps zuaddiert. Es ergibt sich eine Einspeiseleistung $P_E$, die an einen Stromvorgabeblock 318 als neuer Leistungssollwert gegeben wird.

Der Stromvorgabeblock 318 kann insbesondere für den einzuspeisenden Strom einen Stromzeiger, bzw. unter Berücksichtigung der mehreren Phasen mehrere Stromzeiger, vorgeben. Dazu kann die Spannungsamplitude A und das Phasensignal $\varphi_0$ berücksichtigt werden. Das Ergebnis ist somit ein Sollstrom $i_s$. Dieser kann an der Stromsummierstelle 320 mit einem Iststrom $i_i$ verglichen werden und entsprechend kann der zur Einspeisung verwendete Wechselrichter bzw. Umrichter 322 angesteuert werden. Dieser Umrichter 322 ist hier durch einen Hystereseblock symbolisiert, der zur Stromeinspeisung ein Toleranzbandverfahren andeuten soll. Das Ergebnis des Umrichters 322 wird somit in das elektrische Versorgungsnetz 324 eingespeist.

Mit dem vorgeschlagenen Verfahren kann, zumindest zum Teil, eine Eigenschaft von spannungsprägenden Umrichtern bereitgestellt werden, ohne aber eine echte oder vollständige Spannungsprägung bereitzustellen. Besonders wird hier nämlich auf die Kurzfristdynamik echter spannungsprägender Umrichter verzichtet. Es kann aber durch das vorgeschlagene Verfahren schnell eine Momentanreserve bereitgestellt werden und diese kann auch dämpfende Eigenschaften für das elektrische Versorgungsnetz erreichen.

Bei dem vorgeschlagenen Verfahren können vorhandene Regelungsarchitekturen genutzt werden. Es ist möglich, eine Momentanreserve durch stromprägende Umrichter bereitzustellen. Damit kann auch ein Verhalten äquivalent zu einer Schwungmasse bereitgestellt werden.

Bei dem vorgeschlagenen Verfahren wird eine Stromregelung verwendet bzw. sie bleibt unangetastet. Um die zusätzliche Leistung für die Nachbildung einer Momentanreserve zu bestimmen, wird das Phasenwinkelsignal bzw. das Phasensignal $\varphi_0$ einem Verzögerungsglied erster Ordnung zugeführt. Von dem verzögerten Signal wird das Originalsignal subtrahiert. Das Ergebnis ist eine Phasendifferenz. Diese wird durch die berechnete Phasendifferenz bei Nennleistung, die nämlich in Abhängigkeit von der Netzimpedanz berechnet wird, dividiert. Das Ergebnis wird mit der Nennleistung multipliziert.

Es ergibt sich eine Differenzleistung, die der Umrichtersteuerung oder der Leistungssteuerung zugeführt wird. Dort kann sie nämlich, wie Fig. 3 zeigt, zur Sollleistung addiert werden. Mit einem so erstellten neuen Leistungswert kann dann die Einspeisung in ansonsten gewohnter Weise durchgeführt werden, nämlich unter Verwendung einer Stromregelung bzw. stromprägenden Einspeisung.

Der so ergänzte Leistungswert, nämlich die Ergänzungsleistung $P_a$ wird im Grunde gemäß Fig. 3 der Umrichterregelung zugeführt. Es kommt aber auch in Betracht, dass die Ergänzungsleistung $P_a$ einer übergeordneten Leistungsregelung zugeführt wird und dort die Sollleistung entsprechend verändert.

Natürlich können Begrenzungen vorgesehen werden, sollte die Ergänzungsleistung $P_a$ zu groß werden, oder es wird in Kauf genommen, dass ein entsprechend veränderter Leistungssollwert nur bis zur maximal möglichen Leistung umgesetzt wird.

**Patentansprüche**

1. Verfahren zum Einspeisen elektrischer Leistung in ein elektrisches Versorgungsnetz über einen Verbindungsknoten mittels einer umrichtergeführten Einspeiseeinheit, insbesondere mittels einer Windenergieanlage (100) oder eines Windparks (112), wobei

   - das elektrische Versorgungsnetz (120) eine Netzspannung und eine Netzfrequenz aufweist und durch eine Netznennspannung und eine Netznennfrequenz gekennzeichnet ist,
   - die elektrische Netzspannung des elektrischen Versorgungsnetzes (120) erfasst wird,
   - in Abhängigkeit von der erfassten Netzspannung ein verzögerter Differenzwinkel ermittelt wird, wobei

     - der verzögerte Differenzwinkel einer Differenz entspricht zwischen

       - einem erfassten Phasensignal, das einen zeitlichen Verlauf eines Phasenwinkels der Netzspannung angibt, und
       - einem gegenüber dem erfassten Phasensignal verzögertem Phasensignal,

     - eine für den Verbindungsknoten (118) wirksame Netzimpedanz ($Z_{net}$) erfasst wird, und
     - eine Einspeiseleistung ($P_E$)

- in Abhängigkeit von dem verzögerten Differenzwinkel und
- in Abhängigkeit von der erfassten Netzimpedanz vorgegeben wird.

2. Verfahren nach Anspruch 1, **dadurch gekennzeichnet, dass**

    - das erfasste Phasensignal eine Phasenlage im Sinne eines nicht umlaufenden Phasenwinkels angibt,
    - das erfasste Phasensignal über ein Verzögerungsglied geführt wird, um das verzögerte Phasensignal zu erzeugen, und
    - der verzögerte Differenzwinkel als Differenz zwischen dem erfassten Phasensignal und dem verzögerten Phasensignal gebildet wird.

3. Verfahren nach Anspruch 1 oder 2, **dadurch gekennzeichnet, dass**

    - die Verzögerung zwischen erfasstem Phasensignal und verzögertem Phasensignal durch eine Verzögerungszeitkonstante gekennzeichnet ist im Bereich von 1 - 10 Sekunden, insbesondere, dass
    - die Verzögerung durch ein bzw. das Verzögerungsglied (306) erreicht wird, das als Verzögerungsglied 1. Ordnung ausgebildet ist, mit der Verzögerungszeitkonstanten als Zeitkonstante des Verzögerungsglieds (306).

4. Verfahren nach einem der vorstehenden Ansprüche, **dadurch gekennzeichnet, dass**

    - das Phasensignal einen Phasenwinkel einer Spannungsphase in Bezug auf eine Referenzphase angibt.

5. Verfahren nach einem der vorstehenden Ansprüche, **dadurch gekennzeichnet, dass**

    - zum Vorgeben der Einspeiseleistung in Abhängigkeit von der erfassten Netzimpedanz,
    - der verzögerte Differenzwinkel in Bezug gesetzt wird zu einer Phasenverschiebung zwischen Strom und Spannung bedingt durch die erfasste Netzimpedanz, insbesondere

        - zu einer Phasenverschiebung bei Übertragung einer Nennleistung der Einspeiseeinheit über die Netzimpedanz, und/oder dass

    - ein Quotient gebildet wird aus dem verzögerten Differenzwinkel und der Phasenverschiebung.

6. Verfahren nach einem der vorstehenden Ansprüche, **dadurch gekennzeichnet, dass**

    - zum Vorgeben der Einspeiseleistung in Abhängigkeit von der erfassten Netzimpedanz,
    - ein Quotient gebildet wird aus dem verzögerten Differenzwinkel und einer bzw. der Phasenverschiebung zwischen Strom und Spannung bedingt durch die erfasste Netzimpedanz, wobei
    - die Phasenverschiebung φ berechnet wird durch die Formel:

$$\varphi = \arcsin\left(\frac{\sqrt{(P_N * Z)}}{U_N}\right)$$

wobei

    $P_N$ eine Nennleistung des Einspeisers,
    $Z$ die Netzimpedanz und
    $U_N$ die Netznennspannung bezeichnet.

7. Verfahren nach einem der vorstehenden Ansprüche, **dadurch gekennzeichnet, dass**

    - die Netzimpedanz im laufenden Betrieb der Windenergieanlage laufend, insbesondere kontinuierlich erfasst wird, um dadurch die erfasste Netzimpedanz zu erhalten.

8. Verfahren nach einem der vorstehenden Ansprüche, **dadurch gekennzeichnet, dass**

    - das Verfahren an einem Verbindungsknoten, insbesondere an einem Netzanschlusspunkt mit einem Kurzschlussstromverhältnis von wenigstens 8, insbesondere wenigstens 10 durchgeführt wird.

9. Verfahren nach einem der vorstehenden Ansprüche, **dadurch gekennzeichnet, dass**

    - ein bzw. der Quotient aus

        - dem verzögerten Differenzwinkel und
        - einer bzw. der Phasenverschiebung zwischen Strom und Spannung bedingt durch die erfasste Netzimpedanz
        als Bewertungsquotient gebildet wird, als Maß einer Bewertung des verzögerten Differenzwinkels zu der Phasenverschiebung, und

    - der Bewertungsquotient zum Vorgeben der Einspeiseleistung mit einem vorbestimmten Leistungswert multipliziert wird, insbesondere mit einer bzw. der Nennleistung der Einspeiseeinheit.

10. Verfahren nach einem der vorstehenden Ansprüche, **dadurch gekennzeichnet, dass**

- zum Vorgeben der Einspeiseleistung in Abhängigkeit von dem verzögerten Differenzwinkel und der erfassten Netzimpedanz,
- eine Ergänzungsleistung ($P_a$) in Abhängigkeit von dem verzögerten Differenzwinkel und der erfassten Netzimpedanz, bestimmt wird, und
- zu einer von dem verzögerten Differenzwinkel unabhängig vorgegebenen Sollleistung addiert wird, um die Einspeiseleistung als insgesamt einzuspeisende Leistung vorzugeben.

11. Verfahren nach Anspruch 10, rückbezogen auf Anspruch 9, **dadurch gekennzeichnet, dass**

- der Bewertungsquotient zum Vorgeben des Einspeisestroms mit dem vorbestimmten Leistungswert multipliziert wird, insbesondere mit der Nennleistung der Einspeiseeinheit multipliziert wird, um dadurch die Ergänzungsleistung zu erhalten.

12. Verfahren nach einem der vorstehenden Ansprüche, **dadurch gekennzeichnet, dass**

- eine bzw. die Ergänzungsleistung, die zu einer bzw. der von dem verzögerten Differenzwinkel unabhängig vorgegebenen Sollleistung addiert wird, um die Einspeiseleistung als insgesamt einzuspeisende Leistung vorzugeben, mit einem Anpassungsterm, insbesondere einem Anpassungsfaktor modifiziert, insbesondere multipliziert wird, der zwischen 0 und 1 liegt, wobei insbesondere
- der Anpassungsterm in Abhängigkeit von einer bzw. der Sollleistung und/oder einer aktuell eingespeisten Leistung eingestellt wird.

13. Windenergiesystem (112) mit einer oder mehreren Windenergieanlagen (100) zum Einspeisen elektrischer Leistung in ein elektrisches Versorgungsnetz (120) über einen Verbindungsknoten (118), wobei

- das Windenergiesystem (112) oder jede Windenergieanlage (100) jeweils als eine umrichtergeführte Einspeiseeinheit ausgebildet sind,
- das elektrische Versorgungsnetz (120) eine Netzspannung und eine Netzfrequenz aufweist und durch eine Netznennspannung und eine Netznennfrequenz gekennzeichnet ist,
- das Windenergiesystem (112) dazu vorbereitet ist, dass

- die elektrische Netzspannung des elektrischen Versorgungsnetzes (112) erfasst wird,
- in Abhängigkeit von der erfassten Netzspannung ein verzögerter Differenzwinkel ermittelt wird, wobei

- der verzögerte Differenzwinkel einer Differenz entspricht zwischen

- einem erfassten Phasensignal, das einen zeitlichen Verlauf eines Phasenwinkels der Netzspannung angibt, und
- einem gegenüber dem erfassten Phasensignal verzögertem Phasensignal,

- eine für den Verbindungsknoten (118) wirksame Netzimpedanz ($Z_{net}$) erfasst wird, und
- eine Einspeiseleistung

- in Abhängigkeit von dem verzögerten Differenzwinkel und
- in Abhängigkeit von der erfassten Netzimpedanz vorgegeben wird.

14. Windenergiesystem (112) nach Anspruch 13, **dadurch gekennzeichnet, dass**

- das Windenergiesystem (112) dazu vorbereitet ist, ein Verfahren nach einem der Ansprüche 1 bis 12 durchzuführen, insbesondere dass
- dazu eine zentrale Steuereinrichtung (122) vorgesehen ist, und/oder jede Windenergieanlage (100) eine Anlagensteuerung (103) aufweist, in der das Verfahren implementiert ist.

Fig. 1

Fig. 2

Fig. 3

EP 4 084 259 A1

Europäisches
Patentamt

European
Patent Office

Office européen
des brevets

# EUROPÄISCHER RECHERCHENBERICHT

Nummer der Anmeldung

EP 21 17 0492

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | DE 10 2017 102018 A1 (WOBBEN PROPERTIES GMBH [DE]) 2. August 2018 (2018-08-02)<br>* Zusammenfassung *<br>* Absätze [0001], [0008], [0015], [0016], [0024] - [0034]; Ansprüche 3,6; Abbildungen 1-3 * | 1-5,7, 13,14<br>6,8-12 | INV.<br>H02J3/38<br>F03D7/02<br>F03D9/25 |
| X<br><br>A | EP 3 514 910 A1 (NORDEX ENERGY GMBH [DE]; WOODWARD KEMPEN GMBH [DE]) 24. Juli 2019 (2019-07-24)<br>* Absätze [0001], [0002], [0005] - [0015], [0018] - [0024], [0027]; Abbildungen 1-5 * | 1,13,14<br><br>2-12 | |
| A | CN 110 336 318 A (UNIV SHAANXI SCIENCE & TECH) 15. Oktober 2019 (2019-10-15)<br>* Absätze [0001] - [0015]; Abbildungen 1-14 * | 1-14 | |
| A | EP 3 496 227 A1 (SENVION GMBH [DE]) 12. Juni 2019 (2019-06-12)<br>* Absätze [0010], [0018] - [0026]; Abbildungen 1-8 *<br>----- | 1-14 | RECHERCHIERTE SACHGEBIETE (IPC)<br><br>H02J<br>F03D |

Der vorliegende Recherchenbericht wurde für alle Patentansprüche erstellt

| Recherchenort | Abschlußdatum der Recherche | Prüfer |
|---|---|---|
| München | 12. Oktober 2021 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 0492

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2021

| Im Recherchenbericht angeführtes Patentdokument | Datum der Veröffentlichung | Mitglied(er) der Patentfamilie | Datum der Veröffentlichung |
|---|---|---|---|
| DE 102017102018 A1 | 02-08-2018 | BR 112019015157 A2 | 24-03-2020 |
| | | CA 3049617 A1 | 09-08-2018 |
| | | CN 110249496 A | 17-09-2019 |
| | | DE 102017102018 A1 | 02-08-2018 |
| | | EP 3577738 A1 | 11-12-2019 |
| | | JP 2020506664 A | 27-02-2020 |
| | | KR 20190109539 A | 25-09-2019 |
| | | US 2020044455 A1 | 06-02-2020 |
| | | WO 2018141892 A1 | 09-08-2018 |
| EP 3514910 A1 | 24-07-2019 | CN 110061518 A | 26-07-2019 |
| | | EP 3514910 A1 | 24-07-2019 |
| | | US 2019229735 A1 | 25-07-2019 |
| CN 110336318 A | 15-10-2019 | KEINE | |
| EP 3496227 A1 | 12-06-2019 | CN 109888816 A | 14-06-2019 |
| | | DE 102017011235 A1 | 06-06-2019 |
| | | EP 3496227 A1 | 12-06-2019 |
| | | JP 6694494 B2 | 13-05-2020 |
| | | JP 2019103389 A | 24-06-2019 |
| | | KR 20190067097 A | 14-06-2019 |
| | | US 2019170117 A1 | 06-06-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10794364 B